Europäisches Patentamt

European Patent Office

Office européen des brevets

(11) Veröffentlichungsnummer: **0 225 515**
**B1**

(12) **EUROPÄISCHE PATENTSCHRIFT**

(45) Veröffentlichungstag der Patentschrift:
**07.02.90**

(51) Int. Cl.⁴: **F16L 33/04, F16L 3/10**

(21) Anmeldenummer: **86116048.9**

(22) Anmeldetag: **20.11.86**

(54) **Rohrschelle.**

(30) Priorität: **07.12.85  DE 3543383**

(43) Veröffentlichungstag der Anmeldung:
**16.06.87 Patentblatt 87/25**

(45) Bekanntmachung des Hinweises auf die Patenterteilung:
**07.02.90 Patentblatt 90/6**

(84) Benannte Vertragsstaaten:
**AT CH DE ES FR GB IT LI NL**

(56) Entgegenhaltungen:
**DE-A- 3 308 459**
**DE-A- 3 346 423**
**DE-U- 6 900 634**
**GB-A- 1 033 659**
**US-A- 2 368 929**
**US-A- 2 941 273**

(73) Patentinhaber: **Müller, Franz, Eichelhäherstrasse 1,
D-6200 Wiesbaden(DE)**

(72) Erfinder: **Müller, Franz, Eichelhäherstrasse 1,
D-6200 Wiesbaden(DE)**

(74) Vertreter: **Jochem, Bernd, Dipl.-Wirtsch.-Ing.,
Staufenstrasse 36 Postfach 17 41 09,
D-6000 Frankfurt/Main(DE)**

## Beschreibung

Die Erfindung betrifft eine Rohrschelle, bestehend aus einem ringförmigen Bügel mit wenigstens einer Öffnung, die durch eine Spannschraube schließbar ist, deren Fuß auf der einen Seite der Öffnung mit Gewindeeingriff gelagert und deren Kopf auf der anderen Seite der Öffnung in ein mit Bezug auf die Mittellängsachse der Rohrschelle radial innen offenes Langloch in einem am Bügel angebrachten Flansch oder einem an diesem abgestützten Teil einhakbar ist.

Eine derartige Rohrschelle ist z. B. in der DE-A 33 08 459 beschrieben. Das Langloch im Flansch ist mit Bezug auf die Mittellängsachse der Rohrschelle radial innen offen. Der Kopf der Spannschraube wird beim Einhaken durch ein ausreichend großes Loch im Bügel hindurchgeführt, welches in das Langloch übergeht. Da beide die Öffnung der einteiligen Schelle begrenzenden Flansche starr am Bügel sitzen, ist selbst bei einer dünnen Rohrschelle die zum Einhaken notwendige Beweglichkeit der Spannschraube nur dann gewährleistet, wenn viel Spiel zwischen dem Rohr und der Rohrschelle vorhanden, also deren Öffnung sehr weit ist. Dies bedingt eine lange Spannschraube und in Anbetracht der großen Zahl der bei einem Bauobjekt normalerweise zu montierenden Rohrschellen eine entsprechend lange Montagezeit zum Anziehen der Spannschrauben und hat außerdem den weiteren Nachteil, daß die im fertig montierten Zustand weit von der geschlossenen Rohrschelle abstehenden Schrauben gegebenenfalls störend oder gefährlich sein können.

Bei einer anderen bekannten Rohrschelle gemäß DE-A 33 46 423 ist der Fuß der Spannschraube in eine scheibenförmige Mutter eingeschraubt, die am Bügel der Rohrschelle derart schwenkbar gelagert ist, daß der Schraubenkopf von dem Bügel weg nach außen verschwenkt werden kann, um von dort aus in ein radial außen offenes Langloch in einem Flansch auf der anderen Seite der Öffnung der Rohrschelle eingehakt zu werden. Abgesehen von dem Mangel, daß diese Rohrschelle nur gering belastbar ist, weil bei Verformung das Kopfende der Spannschraube aus dem radial außen offenen Langloch herausrutscht, besteht auch in diesem Fall wieder der Nachteil, daß die Spannschraube verhältnismäßig lang sein muß.

Der Erfindung liegt die Aufgabe zugrunde, eine Rohrschelle der eingangs genannten Art zu schaffen, die sich auch mit einer sehr kurzen Spannschraube gut handhaben und leicht schließen läßt.

Vorstehende Aufgabe wird erfindungsgemäß dadurch gelöst, daß der mit dem Fuß der Spannschraube in Gewindeeingriff stehende Teil mit dem Hauptteil des Bügels über ein Gelenk verbunden ist, dessen Schwenkbereich die Spannstellung und die relative Schrägstellung des Flanschs und der Spannschraube bei deren Einführen in das Langloch an seinem radial inneren Ende einschließt und dessen Schwenkachse im gespannten Zustand der Rohrschelle zwischen deren Mittellängsachse und der Mittellängsachse der Spannschraube angeordnet ist.

Die Erfindung bietet den Vorteil, daß die Spannschraube unabhängig von der Stärke der Rohrschelle und vor allem auch bei nur geringem Spiel zwischen Rohr und Rohrschelle, d. h. schmalem und bei Verwendung einer Gummieinlage sogar minimalem Öffnungsspalt, eingeschwenkt und daher schon aus diesem Grunde sehr kurz sein und mit wenigen Umdrehungen gespannt werden kann. Dabei nimmt der erfindungsgemäß angestrebte Vorteil in dem Maße ab, wie die Gelenkachse an die Mittellängsachse der Spannschraube heranrückt. Das Verschwenken der Sprannschraube um eine im wesentlichen auf ihrer Mittellängsachse liegende Schwenkachse ist als Grenzfall anzusehen.

Die Erfindung wird nachstehend anhand von in der Zeichnung dargestellten Ausführungsbeispielen näher erläutert. Es zeigen:

Fig. 1 eine schematische Darstellung von Spannschrauben an einer Rohrschelle, die um unterschiedliche Gelenkpunkte verschwenkbar sind, zur Erläuterung des der Erfindung zugrunde liegenden Prinzips;

Fig. 2 ein erstes Ausführungsbeispiel einer erfindungsgemäßen Rohrschelle, bei welcher die Spannschraube um ein auf Seiten des Schraubenfußes angeordnetes Gelenk verschwenkbar ist, welches sich mit Zwischenabstand zur Mittellängsachse der Spannschraube am Bügel der Rohrschelle befindet.

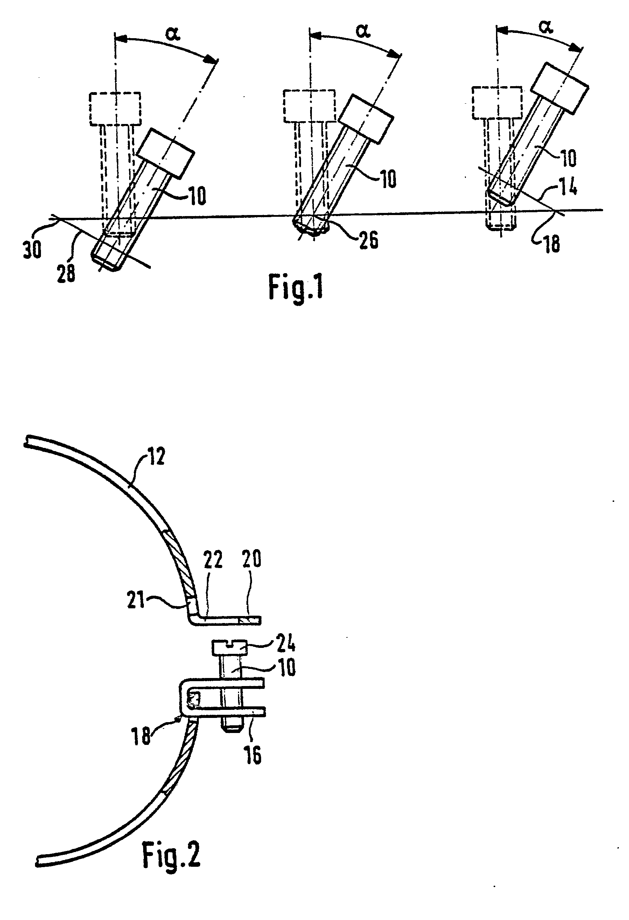

Fig. 1 veranschaulicht, welche unterschiedlichen Auswirkungen die Lage eines definierten Gelenkpunkts auf die Bewegungsverhältnisse der Spannschraube beim Einhaken in ein mit Bezug auf die Mittellängsachse der Rohrschelle radial innen offenes Langloch in einem der Spannschraube gegenüberliegenden Flansch an der Öffnung der Rohrschelle hat. Bei allen drei in Fig. 1 gezeigten Varianten befindet sich der nicht gezeigte Mittelpunkt der Rohrschelle mit Abstand rechts von der jeweils gezeigten Spannschraube. Diese ist jeweils am Fuß gelenkig gelagert, allerdings bei allen Varianten in unterschiedlicher Weise, und aus der in ausgezogenen Linien gezeigten Stellung um den Winkel $\alpha$ in die gestrichelte Stellung zu verschwenken, wenn der Kopf der Spannschraube von der radial inneren Seite der Rohrschelle aus in das dort offene Langloch im gegenüberliegenden Flansch eingehakt wird. Die linke Darstellung der Fig. 1 entspricht einer Rohrschelle, wie sie in der DE-A 3 436 710 beschrieben ist. Die rechte Darstellung der Fig. 1 entspricht einer praktischen Ausführung z.B. nach Fig. 2, und die mittlere Darstellung der Fig. 1 charakterisiert die Verhältnisse bei einer Rohrschelle, deren Spannschraube um eine ihre Mittellängsachse schneidende Gelenkachse schwenkbar ist.

Wie aus Fig. 2 und der rechten Darstellung der Fig. 1 ersichtlich, wird eine Spannschraube 10, deren Fuß in eine gelenkig am ringförmigen Bügel 12 der Rohrschelle gelagerte Platte 14, ein bügelförmiges Teil 16 oder dergleichen mit Gewindeeingriff eingeschraubt ist, beim Einwärtsschwenken um die mit 18 bezeichnete Gelenkachse auf einem Kreisbogen geführt, der verhältnismäßig weit in Umfangsrichtung des ringförmigen Rohrschellenbügels führt, d.

h. in Fig. 1 und 2 verhältnismäßig weit nach oben an das radial innere Ende eines Flanschs 20 heran, der mit einem radial innen von einem erweiterten Loch 21 ausgehenden, radial außen geschlossenen Langloch 22 versehen ist, in welches der Kopf 24 der Spannschraube 10 eingehakt werden kann. Da beim Schließvorgang der Rohrschelle der Schraubenkopf 24 durch den Hebelweg der gelenkig gelagerten Platte 14, einer Lasche oder eines Bügels 16 nach Fig. 2 an den Flansch 20 herangebracht wird, und zwar an das radial innere offene Ende des Langlochs 22, kommt man mit einer sehr kurzen Spannschraube 10 aus, die sich schnell festziehen läßt.

Bei der Ausführung nach der mittleren Darstellung der Fig. 1 sind die Verhältnisse nicht mehr so günstig wie bei der Ausführung nach Fig. 2. Diese Situation, bei welcher die mit 26 bezeichnete Schwenkachse – es handelt sich im Beispielsfall um die Längsachse eines am Bügel drehbar gelagerten Gelenkbolzens, in den die Spannschraube radial eingeschraubt ist – aus der Mittellängsachse der Spannschraube 10 liegt, ist als Grenzfall anzusehen. Der Schraubenkopf 24 bewegt sich bei der Schwenkbewegung von der in ausgezogenen Linien in Fig. 1 gezeigten inneren Schrägstellung in die gestrichelt dargestellte senkrechte Eingriffsstellung ungefähr auf demselben Niveau, d.h. bei einer bestimmten Öffnungsweite der Rohrschelle braucht die Spannschraube in der zum Einhaken erforderlichen Schräglage, wie sie in Fig. 1 in ausgezogenen Linien dargestellt ist, nur geringfügig länger zu sein als in der gestrichelten Eingriffsstellung. Vergleicht man damit noch einmal die rechte Darstellung in Fig. 1, so zeigt sich deutlich, daß sich dort der Schraubenkopf in der Schräglage beim Einhaken auf einem höheren Niveau befindet als in der gestrichelten Eingriffsstellung, so daß sich auch eine kürzere Spannschraube mit ihrem Kopf leicht in das innere offene Ende des Langlochs einführen läßt.

Ein Gegenbeispiel, welches einer Ausführung nach der DE-A 3 436 710 entspricht, ist in Fig. 1 links dargestellt. Dort ist der Fuß der Spannschraube 10 in eine Lasche oder Platte 28 eingeschraubt, die bei 30 gelenkig am freien Ende eines Flanschs am unteren Teil einer Rohrschelle abgestützt ist, während der Kopf der Spannschraube durch eine Bewegung von radial innen nach radial außen in ein innen offenes Langloch eines Flanschs am oberen Teil der Rohrschelle eingehakt werden soll. Man erkennt, daß sich mit zunehmender Schrägstellung der Schraubenkopf absenkt, d.h. von dem Flansch, an dem er eingehakt werden soll, entfernt. Dies bedeutet mit anderen Worten, daß man bei einer bestimmten Weite der Öffnung der Rohrschelle für den Moment des Einführens der Spannschraube in Schräglage in das radial innen offene Langloch des gegenüberliegenden Flansches eine Schraubenlänge braucht, die wesentlich größer ist, als die Öffnungsweite der Rohrschelle.

Insgesamt läßt sich aus der Gegenüberstellung verschiedener schwenkbarer Lagerungen der Spannschraube nach Fig. 1 die Lehre entnehmen, daß sich mit Bezug auf die Mittellängsachse der Spannschraube die Schwenkachse 18 des Gelenks auf der Seite des Mittelpunkts der Rohrschelle befinden sollte. Sie kann auch bis unmittelbar dicht an die Mittellängsachse der Spannschraube heranrücken. Wenn darüberhinaus gemäß der mittleren Darstellung der Fig. 1 die Gelenkachse die Schraubenachse schneidet, muß bereits die Schraubenlänge in der schrägsten beim Einhaken etwas größer sein als in der gestrichelt gezeigten Eingriffsstellung, aber dieses nur für den Einhakvorgang notwendige Übermaß kann normalerweise in der Praxis unter Berücksichtigung der dann verhältnismäßig einfachen Ausbildung der Schwenklagerung toleriert werden.

Bereits die Fig. 2 zeigt, daß für die Ausbildung des Gelenks alle dem Fachmann zur Verfügung stehenden Konstruktionen in Frage kommen. Dabei muß es sich nicht um ein Gelenk mit Gelenkbolzen handeln, sondern die Gelenkteile können auch, wie z.B. bei Fig. 2, unmittelbar ineinander eingehängt werden. Außerdem könnte das Gelenk in größerem Abstand zur Öffnung der Rohrschelle im Bügel angeordnet sein.

Bei Rohrschellen mit zwei gegenüberliegenden Öffnungen besteht auch die Möglichkeit, statt mit zwei Gelenken nur mit einem einzigen Gelenk beliebiger Konstruktion auszukommen. Es gestattet, beide Spannschrauben 10 gleichzeitig in die jeweils gegenüberliegenden Flansche 20 mit Langloch 22 einzuhaken. Beispielsweise könnten die Spannschrauben 10 in Gewindelöcher in starr mit einer Bügelhälfte verbundenen Flanschen eingeschraubt sein, welche in der Mitte ein Gelenk hat.

## Patentansprüche

1. Rohrschelle, bestehend aus einem ringförmigen Bügel mit wenigstens einer Öffnung, die durch eine Spannschraube schließbar ist, deren Fuß auf der einen Seite der Öffnung mit Gewindeeingriff gelagert und deren Kopf auf der anderen Seite der Öffnung in ein mit Bezug auf die Mittellängsachse der Rohrschelle radial nach innen offenes Langloch in einem am Bügel angebrachten Flansch oder einem an diesem abgestützten Teil einhakbar ist, dadurch gekennzeichnet, daß der mit dem Fuß der Spannschraube (10) in Gewindeeingriff stehende Teil (14, 16) mit dem Hauptteil des Bügels (12) über ein Gelenk (18, 26) verbunden ist, dessen Schwenkbereich die Spannstellung und die relative Schrägstellung des Flanschs (20) und der Spannschraube (10) bei deren Einführen in das Langloch (22) an seinem radial inneren Ende einschließt und dessen Schwenkachse im gespannten Zustand der Rohrschelle zwischen deren Mittellängsachse und der Mittellängsachse der Spannschraube (10) angeordnet ist.

2. Rohrschelle nach Anspruch 1, dadurch gekennzeichnet, daß sie zwei durch Spannschrauben (10) zu schließende Öffnungen hat und diejenige ihrer beiden Bügelhälften, welche über Gewindeeingriff die Spannschrauben trägt, mit einem im mittleren Bereich angeordneten Gelenk ausgebildet ist.

3. Rohrschelle nach einem der Ansprüche 1 bis 2, dadurch gekennzeichnet, daß auch der Flansch (20) mit Langloch (22) gelenkig mit dem Bügel verbunden ist.

## Claims

1. A pipe clamp, comprising an annular strap with at least one opening which can be closed by a clamping screw, the tip of which is mounted on one side of the opening by thread engagement and the head of which on the other side of the opening can be hooked into a slot in a flange attached to the strap or a part supported thereon, which slot opens radially inwards in relation to the central longitudinal axis of the pipe clamp, characterised in that the part (14, 16 ) in thread engagement with the tip of the clamping screw (10) is connected to the main part of the strap (12) via a hinge (18, 26), the pivoting range of which includes the clamping position and the relative inclined position of the flange (20) and the clamping screw (10) during its insertion into the slot (22) at its radially inner end, and the pivot axis of which in the tightened condition of the pipe clamp is disposed between its central longitudinal axis and the central longitudinal axis of the clamping screw (10).

2. A pipe clamp according to Claim 1, characterised in that it has two openings to be closed by clamping screws (10) and that one of its two strap halves carrying the clamping screws by thread engagement is formed with a hinge disposed in the central region.

3. A pipe clamp according to Claim 1 or 2, characterised in that the flange (20) with the slot (22) is also connected articulatedly to the strap.

## Revendications

1. Collier de serrage, se composant d'un étrier de forme annulaire comportant au moins un orifice susceptible d'être obturé à l'aide d'une vis de serrage, dont le pied est susceptible d'être monté, d'un côté de l'orifice, avec un engagement à filetage, et dont la tête est susceptible d'être accrochée, de l'autre côté de l'orifice, dans un trou oblong ouvert radialement vers l'intérieur par rapport à l'axe longitudinal du collier de serrage et pratiqué dans un rebord adjoint à l'étrier ou dans une partie supportée par ce dernier, caractérisé en ce que la partie (14, 16) qui est engagée par filetage au pied de la vis de serrage (10) est reliée à la partie principale de l'étrier (12), par l'intermédiaire d'une articulation (18, 26) dont la zone de pivotement comprend la position serrée et la position inclinée relative du rebord (20) et de la vis de serrage (10), lors de son introduction dans le trou oblong (22) sur son extrémité radiale interne, et dont l'axe de pivotement est disposé, à l'état serré du collier de serrage, entre son axe longitudinal et l'axe longitudinal de la vis de serrage (10).

2. Collier de serrage selon la revendication 1, caractérisé en ce qu'il comporte deux orifices à obturer par des vis de serrage (10) et que celle de ses deux moitiés d'étrier qui porte les vis de serrage, par un engagement à filetage, est réalisée avec une articulation disposée dans la zone centrale.

3. Collier de serrage selon l'une des revendications 1 à 2, caractérisé en ce que le rebord (20) comportant le trou oblong (22) est également relié de manière articulée à l'étrier.

Fig.1

Fig.2